# FASCICULE DE BREVET EUROPEEN

(11) **EP 2 671 800 B1**
(45) Date de publication et mention de la délivrance du brevet: **26.04.2017**
(21) Numéro de dépôt: 13170876.0
(22) Date de dépôt: 06.06.2013
(51) Int. Cl.: B64D 11/06, B64D 25/04, B60N 2/42, B60N 2/427, B60N 2/30, B60N 2/20

(54) **Siège d'aéronef à structure monopoutre et aéronef comportant un tel siège**
Sitz eines Luftfahrzeugs in Einträgerbauweise, und Luftfahrzeug, das einen solchen Sitz umfasst
Aircraft seat with single-beam structure and aircraft comprising such a seat

(30) Priorité: 06.06.2012 FR 1255279
(43) Date de publication de la demande: 11.12.2013
(73) Titulaire: Stelia Aerospace, 17300 Rochefort (FR)
(72) Inventeur: Cecinas, Laurent, 17870 Breuil Magne (FR); Normandin, Julien, 17320 Marennes (FR); Barre, Rémy, 17620 Echillais (FR); Bacquey, Lionel, 33700 Merignac (FR)
(74) Mandataire: Ipside

(56) Documents cités:
- EP-A1- 0 716 980
- EP-A2- 0 679 573
- EP-A2- 2 028 040
- DE-A1- 10 108 741
- DE-A1-102008 056 661
- US-A- 2 331 309
- US-A- 3 532 379

## Description

L'invention relève du domaine général des sièges d'aéronefs. Elle concerne plus particulièrement la structure des sièges équipant le cockpit ou la cabine d'un aéronef. Encore plus particulièrement, mais non limitativement, l'invention vise des sièges particulièrement adaptés à des hélicoptères. De tels sièges sont installés soit dans le poste de pilotage, soit en place arrière pour les passagers des hélicoptères.

La conception de telles structures de sièges est soumise à plusieurs exigences, dont des exigences ergonomiques et des exigences en matière de sécurité.

En effet, les accélérations normales auxquelles sont soumis les aéronefs et la prise en compte de cas extrêmes, telles que diverses conditions de crash, imposent pour la structure une tenue mécanique à un grand nombre de cas de charges statiques et dynamiques pour lesquelles l'intégrité de la structure des sièges lors de l'utilisation de l'aéronef doit être assurée.

Les structures de sièges doivent également assurer un certain nombre de fonctionnalités nécessaires dans le cadre de leur utilisation (réglage en hauteur/angle de l'assise et ou du dossier, des accoudoirs, de la têtière...).

La prise en compte de ces contraintes nécessite la mise en oeuvre de dispositifs impliquant une augmentation sensible de la masse des sièges. Or, une des problématiques des aéronefs est de réduire au maximum les masses pour économiser l'énergie nécessaire au vol de l'aéronef, ainsi que ses performances, et ceci sans abaisser le niveau de sécurité des dispositifs embarqués pour lesquels les exigences règlementaires deviennent de plus en plus contraignantes.

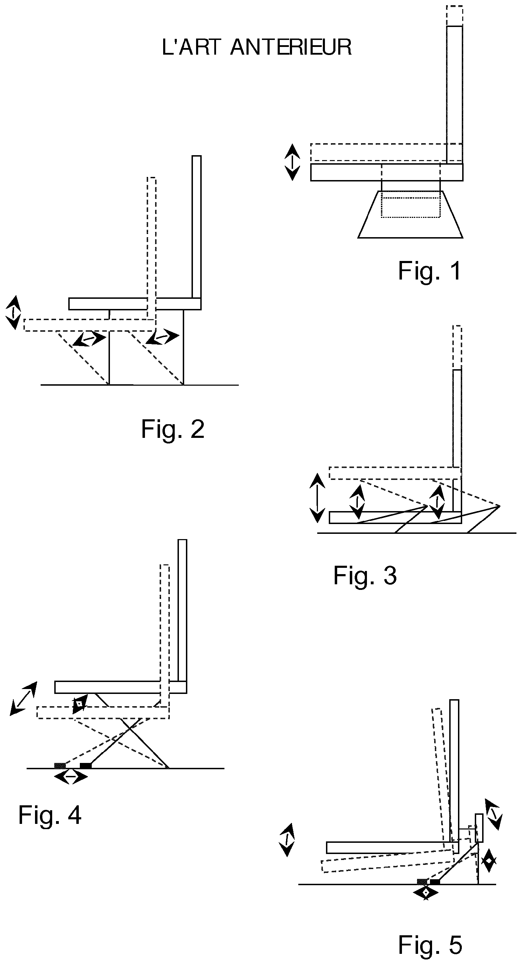

Pour répondre à ces diverses exigences, on connait dans le domaine des structures de sièges, en particulier pour les sièges techniques, diverses solutions (figures 1 à 5) qui sont ou ont été appliquées souvent adaptées à un type ou un environnement particulier d'aéronef.

Un premier dispositif connu (figure 1) utilise une colonne télescopique. Dans cette solution, un siège est solidarisé à un tube d'axe vertical placé sous le siège, coulissant dans une embase fixée au plancher de l'aéronef. Le réglage en hauteur est obtenu par extension ou rétraction de deux ou plusieurs tubes coulissant les uns dans les autres. Leur encastrement assure la raideur de la partie inférieure de la structure du siège. Le maintient en position est assuré par un verrou mécanique ou un actionneur freiné intégré à l'assemblage. L'embase est adaptée aux interfaces du support du siège, par exemple par des points de fixation spécifiques ou par l'intermédiaire de deux rails parallèles dotés de points d'attache régulièrement espacés. La partie supérieure du siège, par exemple un baquet en une ou plusieurs parties articulées, est construite et adaptée à l'extrémité supérieure de la colonne.

Un deuxième dispositif connu est de type parallélogramme.

Dans une première variante (figure 2), les pieds sont fixés au support du siège, généralement par l'intermédiaire de structures additionnelles. Ces pieds sont articulés afin de permettre une oscillation induisant la variation en hauteur de la partie supérieure suivant un arc de cercle et simultanément un déplacement avant / arrière.

Dans une seconde variante (figure 3) le principe est similaire, mais les points de rotation des pieds sont localisés, décalés vers l'arrière, de telle façon que le déplacement vertical n'induit pas un déplacement avant / arrière sensible compte tenu des amplitudes de réglage vertical.

L'entre-axe des pieds est fonction des interfaces avec le support du siège sur le plancher.

Une troisième structure de siège connue est de type pantographe (figure 4). Dans cette disposition, les pieds croisés sont reliés au support du siège par l'intermédiaire d'une structure d'interface. Ils sont articulés à chacune de leurs extrémités. Deux de ces articulations sont associées à un système de glissement pour permettre la déformation du pantographe et le déplacement vertical de la partie supérieure du siège.

Une quatrième solution connue utilise un montage de type console (figure 5). Dans cette solution, la structure basse, composée de tubes ou ferrures guide et de barres de triangulation, est reliée au support du siège sur le plancher de façon classique.

La partie supérieure du siège est solidarisée à la structure inférieure et peut être déplacée verticalement le long des ferrures ou guides. La largeur de la partie supérieure est directement fonction de la distance entre les tubes ou les ferrures guide inférieures.

Le réglage et le maintient en hauteur sont assurés par un système de verrou reliant les parties inférieure et supérieure.

L'inclinaison du dossier est pilotée également par un système de verrou qui prend appui sur la structure inférieure.

Toutes ces solutions présentent une certaine complexité avec de nombreuses pièces mécaniques. Par ailleurs, du fait de leur philosophie d'attache de la structure au bas du siège, et de conservation de possibilités de réglage de la position vertical, elles présentent des difficultés pour assurer la tenue aux efforts longitudinaux ou verticaux, qui ne peuvent être compensées que par un surdimensionnement des pièces, ce qui augmente la masse totale du siège.

Une autre catégorie de solution classique est le montage de type colonne arrière, par exemple tel que décrit dans le brevet US 4.525.010 de Trickey, Netherway et Clifford de juin 1985. Dans ce montage, le siège est attaché par son dossier à deux tubes latéraux sensiblement verticaux ou légèrement inclinés vers l'arrière, tout en ayant la possibilité de coulisser le long de ces tubes dans le cadre d'un réglage de position verticale du siège. Ces tubes sont solidarisés au plancher et au plafond du cockpit de l'aéronef. Un absorbeur de choc disposé entre les deux tubes latéraux, et solidarisé, d'une part, aux tubes latéraux par sa partie haute, et, d'autre part, au siège par sa partie basse, permet de répondre à des contraintes de crash vertical.

Des sièges techniques montés aujourd'hui dans les cockpits de divers hélicoptères ont adoptés ce type de montage qui permet l'intégration de nombreuses fonctionnalités (réglage en hauteur et en angle de l'assise, réglage avant / arrière dans le sens vol, systèmes de compensations de mouvements, absorption dynamique en cas de crash, systèmes d'atténuation de vibrations...).

Les diverses variantes connues de montages arrière sont toutes basées sur le principe de deux structures latérales remontant de chaque coté du dossier du baquet d'assise du siège, et permettant une bonne tenue structurelle de ce dernier en vertical, longitudinal, et latéral, avec les divers moments de torsion associés. Ces systèmes ont cependant l'inconvénient d'une part de nécessiter un nombre de pièces important pour chaque fonction, puisqu'il faut dupliquer chaque système sur les deux structures latérales, et donc ici encore de générer de la masse et d'autre part de lier la structure complexe du siège associée aux différentes contraintes techniques à la largeur du siège qui dépend essentiellement d'exigences ergonomiques et de l'espace disponible dans l'aéronef pour l'installation du siège.

Dans une variante du montage de type colonne arrière, dont un exemple est décrit dans la demande de brevet EP 0679573, qui est considéré comme l'art antérieur le plus proche et montre les caractéristiques du préambule de la revendication 1, le ou les tubes de la colonne arrière sont fixés par un montage articulé, en partie basse des tubes, à une structure de fixation du siège au plancher. Dans ce cas, pour obtenir un montage au moins isostatique indispensable à la stabilité du siège, il est alors nécessaire de disposer de contrefiches pour maintenir les tubes dans des positions stables tant longitudinalement que latéralement. Outre sa complexité et les pénalités de masse qu'elle génère, une telle solution de triangulation exige d'étendre l'extension vers l'arrière de la structure de fixation au plancher afin de former une base suffisante pour reprendre les efforts longitudinaux du siège.

Un tel siège n'apporte donc pas de solution satisfaisante dans la recherche d'une simplification de la structure du siège qui puisse être avantageuse en matière de coûts de réalisation, de masse, de volume occupé et de coût de maintenance.

La présente invention a donc pour objet de remédier à ces inconvénients en simplifiant la structure du siège tout en assurant les mêmes fonctionnalités de réglage et une tenue mécanique améliorée ou au moins équivalente.

L'invention vise plus particulièrement un siège d'aéronef avec les caractéristiques techniques de la revendication 1. Le siège comporte un baquet d'assise, déterminant une direction longitudinale X vers l'avant du siège et une direction verticale Z vers le haut du siège, baquet d'assise comportant un dossier et une assise solidaire du dossier.

Le siège comporte une poutre structurale unique, dite poutre guide, située dans une partie arrière du siège, orientée dans une direction Z1 sensiblement verticale ou inclinée par rapport à la direction verticale Z dans le plan XZ déterminé par les directions longitudinale X et verticale Z et le baquet d'assise est maintenu en avant de la poutre guide par deux attaches solidaires du dossier sur une face arrière du dossier et distantes l'une de l'autre suivant la direction Z1.

Un tel agencement permet d'obtenir une structure du siège particulièrement simple, résistante et d'intégration aisée dans un aéronef.

L'inclinaison de la direction Z1 par rapport à la verticale permet d'adapter le confort du siège par un utilisateur et ou de simplifier les mécanismes de réglage.

Pour assurer un réglage de la hauteur du baquet d'assise, réglage qui peut-être réalisé lors de l'assemblage du siège ou par un utilisateur, les deux attaches solidaires du dossier sont coulissantes le long de la poutre guide suivant la direction Z1 et comporte un dispositif de blocage de la position suivant la direction Z1 sur au moins une des deux attaches.

Pour satisfaire au principe le plus général de fixation des sièges d'aéronef à des rails de fixations normalisés intégrés aux planchers des cabines, la poutre guide est solidaire par encastrement d'une structure de liaison de la poutre guide au plancher de l'aéronef et la structure de liaison comporte au moins quatre points de fixation au plancher répartis suivant deux lignes sensiblement parallèles à la direction longitudinale X et distantes, en fonction des écartements des fixations au niveau du plancher, d'un plan de symétrie vertical XZ du siège.

Dans un mode de réalisation, la structure de liaison de la poudre guide au plancher comporte un manchon d'encastrement de la poutre guide auquel manchon sont solidaires quatre pieds à des extrémités libres desquels sont agencés les points de fixation.

Dans un autre mode de réalisation, la poutre guide est encastrée dans une structure du plancher, par exemple dans un manchon d'encastrement solidaire de la structure du plancher de l'aéronef. Une telle solution s'avère particulièrement simple sur le plan de la structure du siège .

Pour assurer une absorption d'énergie en cas de crash vertical, la poutre guide est coulissante suivant une direction parallèle à Z1 dans le manchon et est maintenue suivant la direction de coulissement par un dispositif amortisseur d'axe sensiblement vertical, et, de manière indépendante ou combinée, les pieds sont agencés pour absorber par déformation une énergie liée à une force dont une composante verticale vers le bas dépasse un seuil prédéfini.

Dans une autre forme de réalisation, deux pieds d'une même ligne de fixations sensiblement parallèle à la direction X de la structure de liaison sont liés rigidement à la poutre guide et deux pieds, rigidement solidaires l'un de l'autre, de l'autre ligne de fixations sont fixés articulés, suivant un axe Y orienté perpendiculairement au plan XZ, par rapport au sous-ensemble formé par la poutre guide et les deux pieds qui lui sont rigidement liés. Il est ainsi permis au siège de supporter des déformations du plancher entrainant un vrillage entre les deux lignes de fixation, que ce vrillage résulte de déformations normales du plancher lors de l'exploitation de l'aéronef ou de déformations exceptionnelles, prévues dans les exigences de certification, lors de cas de crash.

Dans une forme particulière de réalisation qui permet de modifier l'inclinaison de la poutre guide dans le plan XZ, les deux pieds d'une même ligne de fixations sensiblement parallèle à la direction X de la structure de liaison liés rigidement à la poutre guide sont liés au moyen d'une articulation autour de l'axe Y et cette articulation comporte un dispositif de blocage en rotation, frein ou crabot par exemple.

Afin de permettre le montage d'un siège dans des cabines dont les fixations au plancher ont des distances suivant la direction longitudinale X différentes, avantageusement deux pieds d'une même ligne de fixations sensiblement parallèle à la direction X comportent une partie, dite fixe, dotée d'un interface pour point de fixation sur le plancher solidaire de la poutre guide, et une partie, dite ajustable, également dotée d'un interface pour point de fixation, la partie ajustable étant solidaire de la partie fixe et pouvant coulisser par rapport à la partie fixe selon une direction X parallèle aux lignes de points de fixation, d'au moins un espace entre deux points de fixation ou pouvant être modifiée en longueur suivant la direction X, soit par adaptation de la partie ajustable soit par sélection d'une partie ajustable dans un ensemble de parties ajustables de longueurs différentes.

Dans le cas d'un ensemble poutre guide et structure de liaison « non déformable », avantageusement les efforts de reprise de la ceinture de sécurité du siège sur le baquet d'assise sont diminués lorsque à chacune de ses extrémités la ceinture depuis le point de fixation au baquet passe dans un premier guide solidaire de la poutre guide, situé à une hauteur supérieure à l'attache sur le baquet, puis passe dans un second guide solidaire du pied du côté correspondant, situé à une hauteur inférieure au premier guide et à une hauteur inférieure à l'assise, puis remonte au dessus de l'assise. Par ce cheminement qui diminue les efforts aux points de fixation sur le baquet d'assise, la longueur de la ceinture ressentie par l'occupant du siège n'est pas sensiblement modifiée lorsque la hauteur du baquet est modifiée, en particulier en cas de crash lorsque le baquet descend sous l'effet de l'accélération verticale pour absorber une partie de l'énergie, et l'occupant est ainsi correctement maintenu sur son siège.

Dans une forme particulière de réalisation d'un baquet d'assise réglable en inclinaison par rapport à la poutre guide, une des deux attaches solidaires du dossier comporte un pivot d'articulation du dossier autour d'un axe parallèle à une direction Y perpendiculaire au plan XZ et l'autre attache comporte un élément extensible de modification, localement, de la distance du dossier à la poutre guide, extension qui provoque la rotation du baquet et son inclinaison autour du pivot.

Avantageusement la poutre guide comporte au moins deux glissières sensiblement symétriques par rapport à un plan de symétrie vertical XZ de la poutre guide et dans les glissières sont montés glissant librement les attaches solidaires du dossier.

Par exemple l'attache comportant un élément extensible comporte au moins deux bras coulissant dans une glissière antérieure à des extrémités indépendantes et pivotant autour d'un axe commun parallèle à la direction Y lié au dossier à leurs autres extrémités pour former un angle modifiable et donc modifier localement la distance entre le dossier et la poutre guide.

Dans une forme de réalisation, le siège comporte une fixation dans une partie supérieure de la poutre guide, de liaison à une structure de plafond ou d'une cloison de l'aéronef, par laquelle la poutre est maintenue au plafond ou à la cloison.

L'invention concerne également un aéronef comportant un ou plusieurs sièges d'aéronef suivant l'invention de sorte que l'aéronef bénéficie des masses réduites possible avec les sièges dont les capacités, de réglage en particulier, peuvent être différentes en fonction de la destination du siège, siège pilote ou siège passager, et bénéficie d'une meilleure utilisation de l'espace de la cabine.

La description et les dessins d'un mode particulier de réalisation de l'invention, permettront de mieux comprendre les buts et avantages de l'invention. Il est clair que cette description est donnée à titre d'exemple, et n'a pas de caractère limitatif.

Dans les dessins :
- la figure 1 illustre schématiquement un siège de type colonne, connu de l'homme de l'art, vu de côté ;
- les figures 2 et 3 illustrent de la même manière des sièges de type parallélogramme ;
- la figure 4 illustre de la même manière un siège de type pantographe ;
- la figure 5 illustre de la même manière un siège de type console ;
- la figure 6 illustre de façon simplifiée en perspective un siège d'aéronef selon l'invention, tel que vu depuis l'arrière ;
- les figures 7a, 7b, 7c, 7d, 7e,7f illustrent un mode de réalisation particulier de l'invention, respectivement en perspective telle que vue de l'arrière gauche (figure 7a), en vue de l'arrière (figure 7b), en perspective vue de l'avant (figure 7c), en vue de gauche pour deux positions de hauteur de siège (figure 7d), une vue d'un exemple de poutre guide en section droite (figure 7e), et un détail en perspective arrière du siège du dispositif de ceinture (figure 7f) ;
- la figure 8 illustre vue de l'arrière en perspective un autre exemple d'un mode de réalisation de siège suivant l'invention comportant un pied articulé et un dispositif de réglage d'inclinaison du baquet.

Un siège suivant l'invention trouve sa place dans un aéronef, orienté selon un axe longitudinal de l'aéronef, sensiblement face ou dos à une direction de déplacement principal de l'aéronef en vol, fixé à un plancher 100 sur lequel sont présents un ou plusieurs groupes de deux rails de fixation 110a, 110b parallèles entre eux et à l'axe longitudinal de l'aéronef, destinés à la fixation de sièges, ou au moins un ensemble de points de fixation de sièges.

Le siège est un siège pour pilote fixé dans un poste de pilotage ou pour passager fixé dans une cabine de l'aéronef.

On considère dans la présente description deux rails de fixations, destinés à la fixation d'un siège, dont l'espacement et les caractéristiques sont connus de l'homme du métier, et donc non décrits en détails ici. On utilisera dans la suite de la description un repère X, Y, Z pour les axes longitudinaux, transversaux et verticaux du siège. Le long de l'axe longitudinal X, on utilisera de même les termes "avant" et "arrière", correspondant au sens du siège, et de façon équivalente, les termes "antérieur" et "postérieur".

Chacun de ces rails 110a, 110b comporte des emplacements de fixation, non détaillés sur les figures, permettant d'attacher une structure sur ces rails, typiquement par boulonnage, ces emplacements de fixation étant généralement régulièrement espacés, avec un pas d'espacement normalisé, par exemple de un pouce.

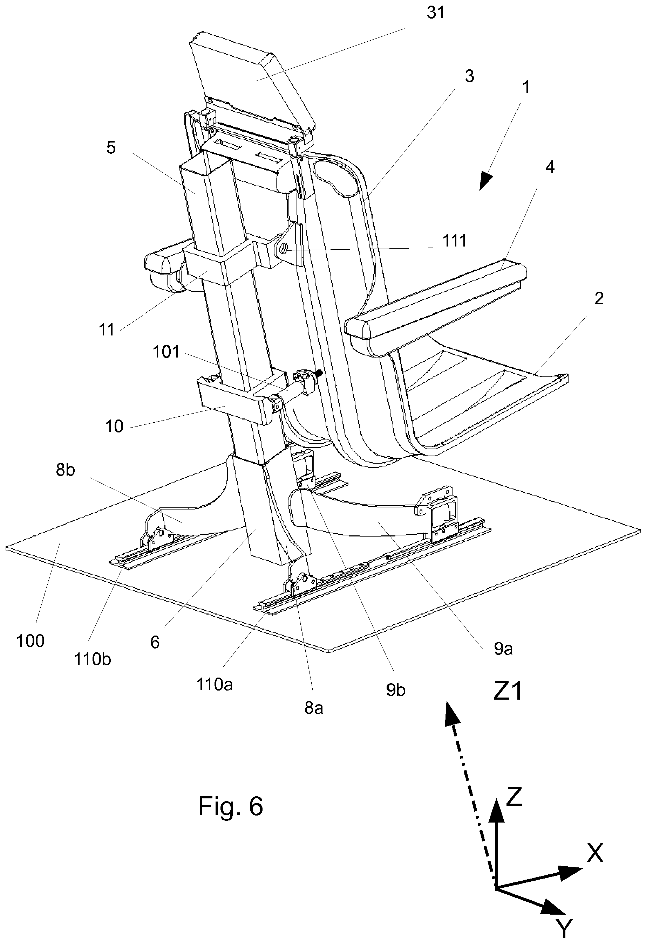

Telle qu'on peut le voir sur la figure 6, destinée plus à comprendre le principe de l'invention, qu'à représenter les dimensions des divers éléments, un siège d'aéronef comporte classiquement un baquet d'assise 1 composé d'une assise 2, d'un dossier 3, d'accoudoirs 4 et d'une têtière 31. Le baquet d'assise 1, dont certaines parties sont optionnelles (accoudoirs, têtière...) et éventuellement articulées entre elles pour des besoins de réglages ergonomiques, est de forme et de matériau classiques dans ce domaine, par exemple réalisés en matériaux métalliques ou en matériaux composites, et non détaillés ici. De manière connue le siège est orienté, au moins pendant les phases de décollage et d'atterrissage, selon l'axe longitudinal de l'aéronef compte tenu des accélérations subies par l'occupant du siège lors des accélérations pouvant être rencontrées lors d'un freinage d'urgence ou lors d'un crash.

Selon l'invention, le baquet d'assise 1 est fixé par le dossier 3 par une partie arrière du dossier sur une poutre guide 5 qui est une poutre structurale.

La poutre guide 5, située de préférence proche d'un plan vertical X, Z de symétrie du siège, s'étend globalement parallèlement à une ligne médiane du dossier 3, et donc sensiblement perpendiculairement au plancher 100, éventuellement légèrement inclinée de bas en haut vers l'arrière du siège 1, suivant un angle d'inclinaison de vingt degrés environ dans le présent exemple, selon un axe principal Z1.

L'angle d'inclinaison, avantageusement compris entre zéro et vingt cinq degrés vers l'arrière, est avantageusement adapté en fonction des réglages possibles sur le siège de sorte à simplifier ces autres réglage.

La fixation du dossier 3 sur la poutre guide 5 est réalisée par des moyens d'attache bas 10, et haut 11, permettant aux dits moyens d'attache de coulisser le long de la poutre guide 5, et, par là, de modifier une position du baquet d'assise 1 suivant la direction Z1 par rapport au plancher 100 pour permettre un réglage en hauteur dudit baquet d'assise, la réglage en hauteur ayant un effet simultané sur la position longitudinale du baquet d'assise lorsque la poutre guide 5 est inclinée par rapport à la verticale. Des types de moyen de réglage de position en hauteur sont connus, par exemple dans le cas des sièges de type colonne à deux poutres latérales, et sortent du cadre de la présente invention.

Dans un mode de réalisation, le moyen d'attache haut 11 comporte, comme illustré sur la figure 6, un pivot 111 permettant une rotation du baquet d'assise 1 par rapport à la poutre guide 5 autour dudit pivot d'orientation parallèle à l'axe transversal Y. Dans ce mode de réalisation, le moyen d'attache bas 10 comporte d'une part un dispositif extensible, tel qu'un vérin, pour modifier dans certaines limites la distance d'un point du baquet d'assise 1 par rapport à la poutre guide 5 et d'autre part un verrou pour fixer la dite distance, l'ensemble formant un dispositif d'inclinaison 101 permettant le réglage d'inclinaison du baquet d'assise 1 par pivotement autour du pivot 11.

Dans un mode de réalisation non représenté, un résultat équivalent pour obtenir une inclinaison du baquet d'assise 1 consiste à utiliser un agencement inversé dans lequel le moyen d'attache bas est simplement pivotant et le moyen d'attache haut permet de modifier la distance d'un point du baquet d'assise à la poutre guide.

La poutre guide 5 est, dans le présent exemple non limitatif, d'une longueur voisine d'une hauteur du siège d'aéronef. Elle peut cependant être sensiblement plus courte, et par exemple d'une longueur n'excédant pas la moitié de la hauteur du dossier 3, tant qu'elle permet la fixation du dossier 3 à au moins une hauteur maximale souhaitée pour le baquet d'assise 1.

Elle peut également être plus longue, par exemple dans le cas de fixation de ladite poutre guide 5 dans une partie supérieure, par exemple au niveau d'une structure de l'aéronef dans une zone du plafond de la cabine ou d'une cloison agencée en arrière du siège.

La poutre guide 5, ici formée d'un tube structural de section rectangulaire creuse, cette forme de la section n'étant cependant pas imposée et illustrée à titre d'exemple, est maintenue encastrée dans un manchon 6, lequel incorpore avantageusement un amortisseur vertical, non visible sur la figure 6, destiné à l'absorption dynamique d'efforts selon l'axe principal Z1 de la poutre guide 5.

Dans le cas ou un tel dispositif amortisseur est incorporé au manchon 6, la poutre guide, maintenue sensiblement fixe par le dispositif amortisseur en conditions ordinaires, coulisse dans le manchon 6 sous l'effet d'efforts introduits par des accélérations dont des composantes verticales vers le bas dépassant un certain seuil sont assimilables à une situation de crash.

Comme il ressort clairement de la structure décrite du siège de l'invention, la largeur de la poutre guide 5 est indépendante de la largeur du siège.

Le manchon 6 est solidarisé à deux points d'attache sur chacun de deux rails 110a, 110b du plancher 100 de l'aéronef par l'intermédiaire de deux pieds de fixation postérieurs 8a, 8b, et de deux pieds de fixation antérieurs 9a, 9b, dotés chacun en leur extrémité libre d'un interface d'attache correspondant à la géométrie des rails 110a, 110b. L'espacement entre les extrémités des pieds de fixation est adapté à l'espacement des points d'attache sur les rails, classiquement 15 pouces ou 17 pouces.

Le manchon 6 et les pieds de fixation 8a, 8b, 9a, 9b forme une structure de liaison de la poutre guide 5 au plancher 100 de l'aéronef.

Dans le présente exemple, les pieds de fixation 8a, 8b, 9a, 9b sont réalisés sous forme de bras structuraux formés au niveau du manchon 6 et au niveau des interfaces d'attache pour permettre leur fixation sur le manchon 6 et sur les interfaces d'attache sur les rails 110a, 110b. La poutre guide 5 est de préférence disposée sensiblement à égale distance des rails 110a, 110b.

La poutre guide 5, le manchon 6 et les pieds de fixation 8a, 8b, 9a, 9b sont, par exemple, réalisés en métal suivant des procédés conventionnels d'usinage, de formage et d'assemblage, ou en matériau composite, et dimensionnés pour reprendre les efforts extrêmes imposés aux sièges d'aéronefs.

Dans un mode de réalisation, les pieds de fixation 8a, 8b, 9a, 9b sont conçus de manière à absorber une partie de l'énergie par déformation plastique pour limiter les accélérations subies par un occupant du siège lors de situations de crash.

Dans une variante de réalisation, non illustrée, le manchon 6 ou une structure d'encastrement est intégré dans une structure du plancher 100 et la poutre guide 5 est maintenue encastrée dans ledit manchon ou ladite structure d'encastrement. Dans cette variante, une partie basse de la poutre guide 5 est agencée pour être fixée à la structure d'encastrement et en particulier lorsque la structure d'encastrement du plancher est située sous une surface supérieure dudit plancher, sa longueur est adaptée pour se prolonger sous ladite surface supérieure du plancher.

Une telle variante permet d'éviter la mise en oeuvre de rails de plancher et simplifie la fixation des sièges, en particulier lorsqu'un réglage longitudinal de la position du siège n'est pas nécessaire.

Le concept de siège d'aéronef à console monopoutre, dont le principe suivant l'invention vient d'être décrit, présente, par rapport aux dispositifs existants, plusieurs avantages.

Il permet dans certains modes de réalisation de n'installer qu'un seul dispositif pour chaque fonctionnalité (réglage en hauteur/angle, compensation de mouvement, absorption d'énergie...) au lieu d'au moins deux dans les sièges à deux poutres latérales. On réduit ainsi le nombre de dispositifs pour un même nombre de fonctions. C'est un atout majeur dans le cadre de la recherche de gain de masse sur tout équipement aéronautique.

De plus, la limitation du nombre de pièces utilisées pour réaliser les mêmes fonctions simplifie le système, et réduit donc les risques de pannes, la fiabilité de l'ensemble est accrue.

La disposition centrale de la poutre guide 5 permet de dégager l'espace occupé par les genoux d'un passager installé derrière le siège ce qui permet soit d'améliorer le confort offert pour une espacement donné entre deux rangées de sièges successives ou de réduire l'intervalle entre deux rangées de sièges successives à confort équivalent. En effet, dans le cas de sièges à console à deux poutres latérales, l'écartement des rails de fixation au sol dans l'alignement desquels se retrouvent ces poutres structurelles correspond en pratique à l'écartement des genoux. Ces poutres interfèrent donc avec les genoux d'un passager installé juste derrière. L'invention améliore donc l'ergonomie de l'emplacement situé derrière le siège.

En outre dans le cas où la poutre est encastrée dans le plancher de l'aéronef, le passager situé sur un siège derrière le siège considéré a la possibilité de poser ses pieds sur le plancher de chaque côté de la poutre et sans être gêné par des structures de fixation du siège au plancher, notamment à des rails de plancher, son confort étant ainsi amélioré.

De plus, la largeur du baquet et l'espace entre les deux rails ne sont plus directement liés dans l'invention, contrairement aux dispositifs préexistants, ce qui fournit une liberté supplémentaire dans le choix de la largeur du baquet d'assise sans remettre en cause la structure de support, un même modèle de structure de support pouvant être utilisé pour différents modèles de baquets d'assise.

L'invention permet également une section de poutre guide plus importante que pour deux poutres latérales (pour résister aux mêmes efforts), fournissant ainsi une inertie et une rigidité accrues. Cette monopoutre se trouvant au plus près de la colonne vertébrale du passager et dans son axe assure une protection accrue de la personne par rapport aux dispositifs existants dans certains cas de crash et de déformation importante de la cellule de l'appareil,.

La portée de la présente invention ne se limite pas aux détails des formes de réalisation ci-dessus considérées à titre d'exemple, mais s'étend également à des modifications à la portée de l'homme de l'art.

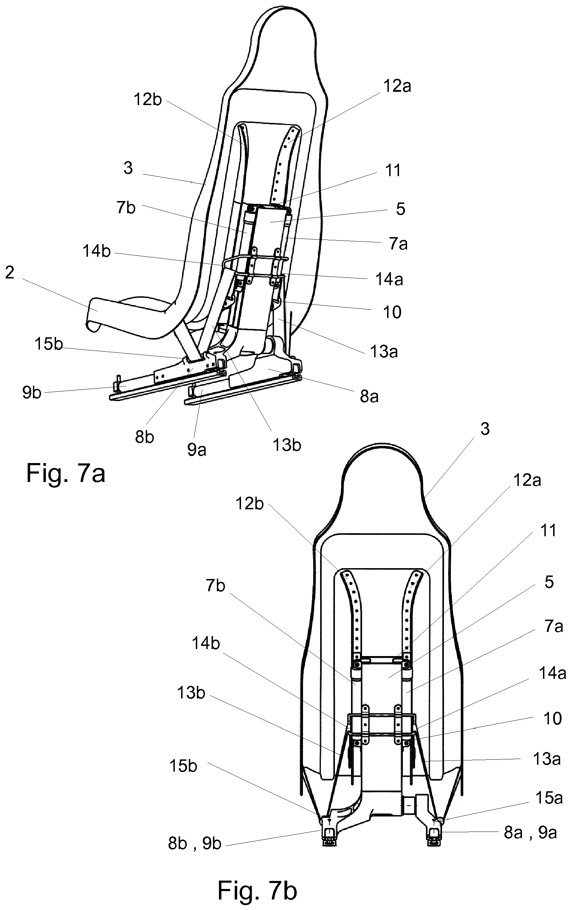

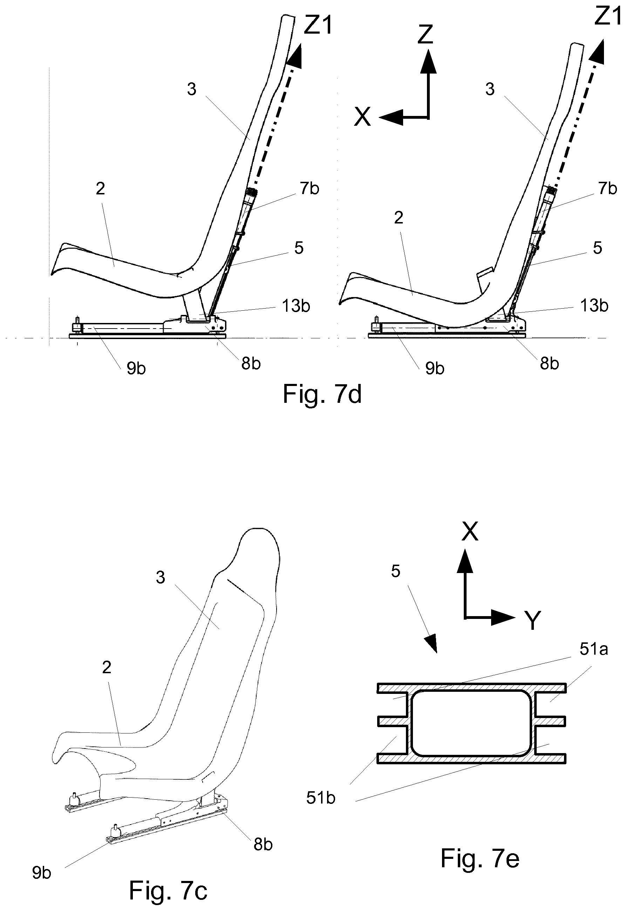

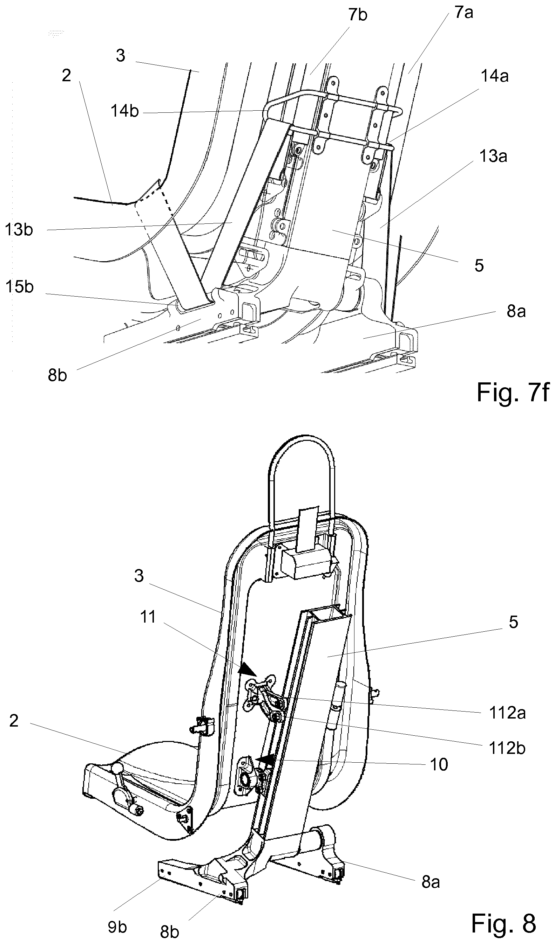

Les figures 7a à 7f illustrent une variante et des détails de réalisation de l'invention. Dans cette variante, sur laquelle le dispositif de réglage de l'inclinaison du baquet d'assise, optionnel, n'est pas représenté, la poutre guide 5 de section principalement rectangulaire, section représentée schématiquement à titre d'exemple de réalisation sur la figure 7e, comporte au moins une glissière 51 a, 51 b de chaque côté, participant avantageusement au renforcement de la poutre guide, et s'étendant selon son axe principal Z1. Cette poutre guide 5 comporte en partie inférieure une structure de liaison au plancher 100 de l'aéronef comportant, d'une part, un pied postérieur monobloc 8b auquel ladite poutre guide est solidarisée de façon rigide (pied du côté gauche du siège dans l'exemple illustré - figures 7a et 7b), et, d'autre part, un pied postérieur articulé 8a, libre en rotation autour d'un axe transversal sensiblement parallèle à la direction Y (pied du côté droit du siège dans l'exemple illustré - figures 7a et 7b), de manière à créer un montage isostatique adapté à prendre en compte des déformations normales de la structure du plancher de l'aéronef.

Dans cet exemple de réalisation, le pied postérieur monobloc 8b et le pied postérieur articulé 8a solidaires de la poutre guide 5 comportent chacun un interface d'attache sur un emplacement de fixation des rails 110a, 110b. Par ailleurs, chaque pied 8a, 8b, dit fixe, comporte une partie extensible suivant la direction X formant le pied antérieur 9a, 9b, dit ajustable, comportant elle-même dans une partie avant un interface d'attache sur les rails. Cette partie extensible, par exemple par coulissement d'un bras dans le pied fixe correspondant ou par montage de pieds ajustables pourvus de bras de longueurs différentes, permet d'adapter le siège à un écartement de points de fixation existants d'un plancher d'aéronef suivant la direction de l'axe longitudinal.

Le dossier 3 du baquet d'assise 1 comporte sur sa partie arrière des raidisseurs structuraux 12a, 12b placés symétriquement de part et d'autre de la ligne médiane du dossier 3, et espacés de manière à permettre le passage de la poutre guide 5. Les raidisseurs structuraux 12a, 12b viennent coulisser, par exemple par l'intermédiaire de patins ou de galets solidaires des dits raidisseurs, dans des glissières antérieures 51a de la poutre guide 5. Ils sont par ailleurs solidaires de parties inférieures de deux amortisseurs 7a, 7b, disposés de part et d'autre de la poutre guide 5, au niveau de glissières postérieures 51 b. Les amortisseurs 7a, 7b sont solidaires par une partie supérieure à la partie haute de la poutre guide 5.

Par un tel agencement, les amortisseurs 7a, 7b absorbent une énergie liée à des efforts sensiblement verticaux générés par des accélérations verticales, en particulier dans les situations de crash.

Les caractéristiques des amortisseurs 7a, 7b dépendent ici encore des conditions extrêmes d'accélérations et de masses que doivent supporter les sièges.

Dans une forme de réalisation, non représentée sur les figures, les amortisseurs 7a, 7b ou un amortisseur unique, sont agencés à l'intérieur de la poutre guide ce qui permet d'obtenir un ensemble plus compact.

Le siège des figures 7a et 7b comporte une ceinture de sécurité, présente sur tous les sièges d'aéronef conformes à la règlementation, formée de deux demi-ceintures 13a, 13b disposées de chaque côté du siège et destinées à être reliées par une boucle d'attache. Chaque demi-ceinture 13a, 13b, qui doit résister aux efforts lors d'un cas de crash, est attachée par une extrémité à un raidisseur structurel 12a, 12b solidaire du baquet d'assise 1. Elle passe ensuite dans un premier guide de ceinture 14a, 14b, solidaire de la poutre guide 5, donc fixe lors de mouvements verticaux du baquet d'assise par rapport à la poutre guide, puis dans un second guide 15a, 15b solidaire du pied postérieur 8a, 8b situé de son côté du siège, donc également fixe lors de mouvements verticaux du baquet d'assise par rapport à la poutre guide, avant de remonter au-dessus de l'assise 2, avantageusement par des ouvertures de passage dans le bord latéral de l'assise 2, pour se fixer sur l'autre partie de ceinture, lorsque celle-ci est attachée.

De cette manière, lorsque le baquet d'assise 1 du siège se déplace le long de l'axe principal Z1 de la poutre guide 5, la longueur de ceinture entre les bords de l'assise qui maintient l'occupant du siège reste globalement inchangée. On obtient ici, par ce double passage dans des guides attachés à la structure fixe, un dispositif de compensation de longueur de la ceinture de sécurité.

Ce dispositif permet d'une part à l'occupant du siège de régler une position verticale du baquet d'assise lorsque sa ceinture est attachée, sans qu'il soit nécessaire de faire usage de ceintures à enrouleur, et d'autre part de compenser la longueur de la ceinture lorsque le siège est déplacé vers le bas pour absorber l'énergie d'un cas de crash, l'occupant du siège étant maintenu sur le siège sans être serré ou relâché de manière excessive par la ceinture, résultat qu'une ceinture à enrouleur ne permet pas d'atteindre en cas de fortes accélérations typiques d'une situation de crash.

Ce dispositif permet en outre, en reportant des points de reprise des efforts de la ceinture sur des éléments résistants de la structure fixe du siège de diminuer les efforts au niveau de la fixation de la ceinture sur le baquet et donc d'éviter des renforcements du baquet d'assise 1 qui sont nécessaires dans les solutions qui consistent à fixer la ceinture directement au niveau de l'assise 2.

Dans une variante plus particulière de la mise en oeuvre détaillée ci-dessus, illustrée sur la figure 8, les deux pieds 8a, 9a liés à la poutre guide 5 sont articulés autour d'un axe transversal Y, et un mécanisme de frein ou de crabot, non représenté, de type classique bloque l'inclinaison de la poutre guide par rapport au pied considéré et donc le siège selon une inclinaison choisie par rapport à la verticale. Les autres pieds 8b, 9b sont comme dans le cas décrit antérieurement laissés libres en rotation, afin d'être en mesure de supporter des déformations du plancher, normales ou exceptionnelles, sans introduire de contraintes dans la structure du siège du fait d'un vrillage du plancher.

Dans un mode de réalisation, illustré dans l'exemple de réalisation de la figure 8, le dossier 3 comporte, de chaque côté de la poutre guide 5, une fixation articulée au niveau de l'attache basse 10 coulissant librement dans une glissière antérieure 51 a de ladite poutre guide. Le dossier 3 comporte par ailleurs ,décalé en hauteur par rapport à l'attache basse, de chaque côté de la poutre guide 5 au niveau de l'attache haute 11 un dispositif de réglage de la distance de ladite attache haute à ladite poutre guide formée dans l'exemple illustré par un moyen de fixation à deux bras indépendants 112a, 112b, asservis par une de leurs extrémités à un même axe de rotation transversal au niveau du dossier 2, et par leurs autres extrémités à un verrou coulissant dans la glissière antérieure 51 a. Ce dispositif à deux bras permet de régler l'inclinaison du baquet d'assise 1 par variation de l'angle entre les bras, une ouverture de l'angle rapprochant l'attache haute 11 du dossier de la poutre guide 5 et inversement une fermeture de l'angle éloignant ladite attache haute.

Dans une variante de réalisation les principes de réalisation des fixations haute et basse sont inversés.

Un dispositif amortisseur assure le maintien dans une position choisie du baquet d'assise 1 le long de la poutre guide 5 en assurant une liaison mécanique entre ladite poutre guide et un point de reprise dudit baquet d'assise, avantageusement au niveau d'une des attaches haute ou basse. En cas de contrainte dynamique sur le siège vers le bas, le baquet d'assise 1 va avoir tendance à coulisser vers le bas en restant guidé le long de la glissière antérieure 51 a, l'énergie étant alors absorbée par un ou plusieurs amortisseurs, non représentés sur la figure 8, disposés sur un ou des côtés de la poutre guide 5, par exemple au niveau de glissières postérieures 51 b, ou bien disposés à l'intérieur de la poutre guide 5, et reliés aux points d'attache du dossier 3 par au moins un câble de rappel.

L'invention permet donc de réaliser un siège de conception à la fois plus simple que suivant les conceptions connues et pouvant intégrer des dispositifs d'absorption d'énergie tout en ayant des caractéristiques ergonomiques améliorées.

Un siège suivant l'invention est ainsi particulièrement adapté pour équiper des hélicoptères dont les normes en matière de protection des occupants dans les cas de crash verticaux sont particulièrement sévères.

Un aéronef pourvu de tels sièges permet de bénéficier d'une masse réduite des aménagements et d'une meilleure utilisation de l'espace de la cabine et du poste de pilotage.

## Revendications

1. - Siège d'aéronef comportant un baquet d'assise (1), déterminant une direction longitudinale X vers l'avant du siège et une direction verticale Z vers le haut du siège, ledit baquet d'assise comportant un dossier (3) et une assise (2) solidaire dudit dossier, dans lequel siège le baquet d'assise est fixé à une poutre guide (5) structurale unique, située dans une partie arrière du siège, orientée dans une direction Z1 sensiblement verticale ou inclinée par rapport à la direction verticale Z dans un plan XZ déterminé par les directions longitudinale X et verticale Z, **caractérisé en ce que** la poutre guide (5) est solidaire par encastrement d'une structure de liaison de ladite poutre guide à un plancher (100) de l'aéronef, ladite structure de liaison comportant au moins quatre points de fixation audit plancher répartis suivant deux lignes sensiblement parallèles à la direction longitudinale X et distantes d'un plan de symétrie vertical XZ dudit siège.

2. - Siège d'aéronef suivant la revendication 1 dans lequel le baquet d'assise (1) est maintenu en avant de la poutre guide (5) par deux attaches (10, 11) solidaires du dossier (3) sur une face arrière dudit dossier et distantes l'une de l'autre suivant la direction Z1.

3. - Siège d'aéronef suivant la revendication 2 dans lequel les deux attaches (10, 11) solidaires du dossier (3) sont coulissantes le long de la poutre guide (5) suivant la direction Z1 et comporte un dispositif de blocage de la position suivant la direction Z1 d'au moins une des dites deux attaches.

4. - Siège d'aéronef suivant l'une des revendications précédentes dans lequel la structure de liaison de la poutre guide (5) au plancher (100) comporte un manchon (6) d'encastrement de la poutre guide (5) auquel manchon sont solidaires quatre pieds (8a, 8b, 9a, 9b) à des extrémités libres desquels pieds sont agencés les points de fixation.

5. - Siège d'aéronef suivant la revendication 4 dans lequel la poutre guide (5) est coulissante suivant une direction parallèle à Z1 dans le manchon (6) et est maintenue suivant la direction de coulissement par un dispositif amortisseur d'axe sensiblement vertical.

6. - Siège d'aéronef suivant la revendication 4 ou la revendication 5 dans lequel les pieds (8a, 8b, 9a, 9b) sont agencés pour absorber par déformation une énergie liée à une force dont une composante verticale vers le bas dépasse un seuil prédéfini.

7. - Siège d'aéronef suivant la revendication 3 dans lequel deux pieds (8b, 9b) d'une même ligne de fixations sensiblement parallèle à la direction X de la structure de liaison sont liés rigidement à la poutre guide (5) et dans lequel deux pieds (8a, 9a), rigidement solidaires l'un de l'autre, de l'autre ligne de fixations sont fixés articulés suivant un axe Y orienté perpendiculairement au plan XZ par rapport au sous-ensemble formé par la poutre guide (5) et les deux pieds (8b, 9b) qui lui sont rigidement liés.

8. - Siège d'aéronef suivant la revendication 7 dans lequel les deux pieds (8b, 9b) d'une même ligne de fixations sensiblement parallèle à la direction X de la structure de liaison liés rigidement à la poutre guide (5) sont liés au moyen d'une articulation autour de l'axe Y, ladite articulation comportant un dispositif de blocage en rotation.

9. - siège suivant la revendication 7 ou la revendication 8 dans lequel deux pieds (8a, 9a) (8b, 9b) d'une même ligne de fixations sensiblement parallèle à la direction X comportent une partie (8a, 8b), dite fixe, dotée d'un interface pour point de fixation sur le plancher (100) solidaire de la poutre guide (5), et une partie (9a, 9b), dite ajustable, également dotée d'un interface pour point de fixation, la partie ajustable (9a, 9b) étant solidaire de la partie fixe (8a, 8b) et pouvant coulisser par rapport à la partie fixe (8a, 8b) selon une direction X parallèle aux lignes de points de fixation, d'au moins un espace entre deux points de fixation de plancher (100) ou pouvant être modifiée en longueur suivant la direction X.

10. - Siège d'aéronef selon l'une des revendications 7 à 9, comportant une ceinture de sécurité solidarisée au baquet d'assise 1, ladite ceinture de sécurité ayant une longueur libre d'un côté intérieur du baquet fonction des caractéristiques morphologiques d'un passager dont elle permet l'attache et dans lequel ladite ceinture depuis chaque point de fixation de la ceinture au baquet passe dans un premier guide (14a, 14b) solidaire de la poutre guide (5), situé à une hauteur supérieure à l'attache sur le baquet, puis passe dans un second guide (15a, 15b) solidaire du pied du côté correspondant (8a, 8b), situé à une hauteur inférieure au premier guide et à une hauteur inférieure à l'assise (2), puis remonte au dessus de l'assise.

11. - Siège d'aéronef suivant l'une des revendications précédentes dans lequel une des deux attaches (10) (11) solidaires du dossier (3) comporte un pivot (111) d'articulation du dossier autour d'un axe parallèle à une direction Y perpendiculaire au plan XZ et l'autre attache (11) (10) comporte un élément extensible (101) de modification localement de la distance dudit dossier à la poutre guide (5).

12. - Siège d'aéronef suivant la revendication 11 dans lequel la poutre guide (5) comporte au moins deux glissières (51 a) sensiblement symétriques par rapport à un plan de symétrie vertical XZ de ladite poutre guide dans lesquelles glissières sont montés glissant librement les attaches (10, 11) solidaires du dossier (3).

13. - Siège d'aéronef suivant la revendication 12 dans lequel l'attache comportant un élément extensible comporte au moins deux bras (112a, 112b) coulissant dans une glissière antérieure (51 a) à des extrémités indépendantes et pivotant autour d'un axe commun parallèle à la direction Y lié au dossier (3) à leurs autres extrémités pour former un angle modifiable.

14. - Siège d'aéronef suivant l'une des revendications précédentes dans lequel la poutre guide (5) comporte une fixation dans une partie supérieure de ladite poutre guide, de liaison à une structure de plafond ou d'une cloison de l'aéronef

15. - Aéronef comportant au moins un siège d'aéronef conforme à l'une des revendications précédentes.

## Patentansprüche

1. Sitz eines Luftfahrzeugs, umfassend eine Sitzschale (1), die eine Längsrichtung X nach vorne des Sitzes und eine Vertikalrichtung Z nach oben des Sitzes bestimmt, wobei die Sitzschale eine Rückenlehne (3) und eine mit der Rückenlehne fest verbundene Sitzfläche (2) umfasst, wobei in dem Sitz die Sitzschale an einem einzigen Strukturführungsträger (5) befestigt ist, der in einem hinteren Teil des Sitzes angeordnet und in eine Richtung Z1 im Wesentlichen vertikal oder geneigt zur Vertikalrichtung Z in einer Ebene XZ, die durch die Längsrichtung X und die Vertikalrichtung Z bestimmt ist, ausgerichtet ist, **dadurch gekennzeichnet, dass** der Führungsträger (5) durch Einsetzen einer Struktur zur Verbindung des Führungsträgers mit einem Boden (100) des Luftfahrzeugs befestigt ist, wobei die Verbindungsstruktur mindestens vier Befestigungspunkte am Boden umfasst, die entlang von zwei Linien im Wesentlichen parallel zu der Längsrichtung X und von einer vertikalen Symmetrieebene XZ des Sitzes entfernt verteilt sind.

2. Sitz eines Luftfahrzeugs nach Anspruch 1, bei dem die Sitzschale (1) vorne am Führungsträger (5) durch zwei Befestigungen (10, 11) gehalten wird, die mit der Rückenlehne (3) auf einer Rückseite der Rückenlehne fest verbunden und voneinander in der Richtung Z1 beabstandet sind.

3. Sitz eines Luftfahrzeugs nach Anspruch 2, bei dem die beiden Befestigungen (10, 11), die mit der Rückenlehne (3) fest verbunden sind, entlang des Führungsträgers (5) in die Richtung Z1 gleitend sind, und der eine Vorrichtung zur Feststellung der Position mindestens einer der beiden Befestigungen in der Richtung Z1 umfasst.

4. Sitz eines Luftfahrzeugs nach einem der vorhergehenden Ansprüche, bei dem die Struktur zur Verbindung des Führungsträgers (5) mit dem Boden (100) eine Hülse (6) zum Einsetzen des Führungsträgers (5) umfasst, mit welcher Hülse vier Füße (8a, 8b, 9a, 9b) fest verbunden sind, wobei an den freien Enden der Füße die Befestigungspunkte vorgesehen sind.

5. Sitz eines Luftfahrzeugs nach Anspruch 4, bei dem der Führungsträger (5) in eine Richtung parallel zu Z1 in der Hülse (6) gleitend ist und in Gleitrichtung durch eine Dämpfungsvorrichtung mit einer im Wesentlichen vertikalen Achse gehalten wird.

6. Sitz eines Luftfahrzeugs nach Anspruch 4 oder Anspruch 5, bei dem die Füße (8a, 8b, 9a, 9b) dazu vorgesehen sind, durch Verformung eine Energie zu absorbieren, die mit einer Kraft verbunden ist, deren vertikale Komponente nach unten eine vordefinierte Grenze überschreitet.

7. Sitz eines Luftfahrzeugs nach Anspruch 3, bei dem zwei Füße (8b, 9b) einer selben Befestigungsreihe im Wesentlichen parallel zur Richtung X der Verbindungsstruktur starr mit dem Führungsträger (5) verbunden sind, und bei dem zwei Füße (8a, 9a) der anderen Befestigungsreihe, die starr miteinander fest verbunden sind, entlang einer Achse Y gelenkig befestigt sind, die senkrecht auf die Ebene XZ in Bezug zu der Untereinheit ausgerichtet ist, die von dem Führungsträger (5) und den beiden starr mit ihm verbundenen Füßen (8b, 9b) gebildet ist.

8. Sitz eines Luftfahrzeugs nach Anspruch 7, bei dem die beiden Füße (8b, 9b) einer selben Befestigungsreihe im Wesentlichen parallel zur Richtung X der Verbindungsstruktur, die starr mit dem Führungsträger (5) verbunden sind, mit Hilfe eines Gelenks um die Achse Y verbunden sind, wobei das Gelenk eine Vorrichtung zur Drehfeststellung umfasst.

9. Sitz nach Anspruch 7 oder Anspruch 8, bei dem die beiden Füße (8a, 9a) (8b, 9b) einer selben Befestigungsreihe im Wesentlichen parallel zur Richtung X einen so genannten festen Teil (8a, 8b), der mit einer Schnittstelle für einen Befestigungspunkt auf dem Boden (100), der mit dem Führungsträger (5) fest verbunden ist, versehen ist, und einen so genannten einstellbaren Teil (9a, 9b) umfassen, der ebenfalls mit einer Schnittstelle für einen Befestigungspunkt versehen ist, wobei der einstellbare Teil (9a, 9b) mit dem festen Teil (8a, 8b) fest verbunden ist und in Bezug zu dem festen Teil (8a, 8b) in eine Richtung X parallel zu den Reihen von Befestigungspunkten gleiten kann, wobei mindestens ein Raum zwischen zwei Bodenbefestigungspunkten (100) in der Länge in der Richtung X verändert werden kann.

10. Sitz eines Luftfahrzeugs nach einem der Ansprüche 7 bis 9, umfassend einen Sicherheitsgurt, der mit der Sitzschale 1 fest verbunden ist, wobei der Sicherheitsgurt eine freie Länge auf einer Innenseite der Schale in Abhängigkeit von den morphologischen Merkmalen eines Passagiers, dessen Befestigung er ermöglicht, hat, und bei dem der Gurt von jedem Befestigungspunkt des Gurts an der Schale aus in einer ersten Führung (14a, 14b) verläuft, die mit dem Führungsträger (5) fest verbunden ist, die sich auf einer größeren Höhe als die Befestigung an der Schale befindet, dann in eine zweite Führung (15a, 15b) übergeht, die mit dem Fuß auf der entsprechenden Seite (8a, 8b) fest verbunden ist, die sich auf einer geringeren Höhe als die erste Führung und auf einer geringeren Höhe als die Sitzfläche (2) befindet, dann wieder über die Sitzfläche hinausragt.

11. Sitz eines Luftfahrzeugs nach einem der vorhergehenden Ansprüche, bei dem eine der beiden Befestigungen (10) (11), die mit der Rückenlehne (3) fest verbunden sind, einen Zapfen (111) zum Anlenken der Rückenlehne um eine Achse parallel zur einer Richtung Y senkrecht zu der Ebene XZ umfasst, und die andere Befestigung (11) (10) ein erweiterbares Element (101) umfasst, um lokal den Abstand der Rückenlehne zum Führungsträger (5) zu verändern.

12. Sitz eines Luftfahrzeugs nach Anspruch 11, bei dem der Führungsträger (5) mindestens zwei Gleitschienen (51a) umfasst, die im Wesentlichen symmetrisch zu einer vertikalen Symmetrieebene XZ des Führungsträgers sind, wobei in diesen Gleitschienen die mit der Rückenlehne (3) fest verbundenen Befestigungen (10, 11) frei gleitend montiert sind.

13. Sitz eines Luftfahrzeugs nach Anspruch 12, bei dem die Befestigung, die ein erweiterbares Element umfasst, mindestens zwei Arme (112a, 112b) umfasst, die in einer vorderen Gleitschiene (51a) an unabhängigen Enden gleiten und um eine gemeinsame Achse parallel zu der Richtung Y, die mit der Rückenlehne (3) verbunden ist, an ihren anderen Enden schwenken, um einen veränderbaren Winkel zu bilden.

14. Sitz eines Luftfahrzeugs nach einem der vorhergehenden Ansprüche, bei dem der Führungsträger (5) eine Befestigung in einem oberen Teil des Führungsträgers zur Verbindung mit einer Deckenstruktur oder einer Trennwand des Luftfahrzeugs umfasst.

15. Luftfahrzeug, umfassend mindestens einen Sitz eines Luftfahrzeugs nach einem der vorhergehenden Ansprüche.

## Claims

1. Aircraft seat comprising a seat bucket (1), which establishes a longitudinal direction X toward the front of the seat and a vertical direction Z toward the top of the seat, said seat bucket comprising a seatback (3) and a seat pan (2) integral with said seatback, wherein said seat bucket is fixed to a single structural guide beam (5), located in a rear part of the seat, oriented in an approximately vertical or inclined direction Z1 in relation to the vertical direction Z in a plane XZ determined by the longitudinal direction X and vertical direction Z, **characterized in that** the guide beam (5) is slotted in a structure for connecting said guide beam to a floor (100) of the aircraft, said connecting structure comprising at least four points for fastening to said floor distributed along two lines that are approximately parallel to the longitudinal direction X and that are apart from a vertical plane of symmetry XZ of said seat.

2. Aircraft seat according to Claim 1, wherein the seat bucket (1) is held in front of the guide beam (5) by two attachment parts (10, 11) that are integral with the seatback (3) on a rear face of said seatback and apart from one another in the direction Z1.

3. Aircraft seat according to Claim 2, wherein the two attachment parts (10, 11) that are integral with the seatback (3) slide along the guide beam (5) in the direction Z1, and comprise a device for locking the position in the direction Z1 of at least one of said two attachment parts.

4. Aircraft seat according to one of the preceding claims, wherein the structure for connecting the guide beam (5) to the floor (100) comprises a mounting sleeve (6) of the guide beam (5) and with which sleeve four feet (8a, 8b, 9a, 9b) are integral and at the free ends of which feet the fastening points are placed.

5. Aircraft seat according to Claim 4, wherein the guide beam (5) slides in a direction parallel to Z1 in the sleeve (6) and is held in the direction of sliding by a damping device with an approximately vertical axis.

6. Aircraft seat according to Claim 4 or Claim 5, wherein the feet (8a, 8b, 9a, 9b) are placed to absorb - by deformation - energy linked to a force, a vertical component downward of which exceeds a predefined threshold.

7. Aircraft seat according to Claim 3, wherein two feet (8b, 9b) of the same line of fasteners that is approximately parallel to the direction X of the connecting structure are rigidly connected to the guide beam (5) and wherein two feet (8a, 9a), rigidly integral with one another, of the other line of fasteners are fixed in an articulated manner, along an axis Y oriented perpendicularly to the plane XZ, in relation to the sub-unit formed by the guide beam (5) and the two feet (8b, 9b) that are rigidly connected to it.

8. Aircraft seat according to Claim 7, wherein the two feet (8b, 9b) of the same line of fasteners that are approximately parallel to the direction X of the connecting structure rigidly linked to the guide beam (5) are linked by means of an articulation around the axis Y, said articulation comprising a device for locking in rotation.

9. Seat according to Claim 7 or Claim 8, wherein two feet (8a, 9a) (8b, 9b) of the same line of fasteners that is approximately parallel to the direction X comprise a part (8a, 8b), called stationary, provided with an interface for a fastening point on the floor (100) that is integral with the guide beam (5), and a part (9a, 9b), called adjustable, also provided with an interface for a fastening point, the adjustable part (9a, 9b) being integral with the stationary part (8a, 8b) and being able to slide in relation to the stationary part (8a, 8b) in a direction X that is parallel to the lines of fastening points, with at least one space between two floor (100) fastening points or that can be changed in length in the direction X.

10. Aircraft seat according to one of Claims 7 to 9, comprising a safety belt that is integral with the seat bucket 1, said safety belt having a free length of an interior side of the bucket that is a function of the morphological characteristics of a passenger whose attachment it makes possible and in which said belt from each fastening point of the belt to the bucket passes through a first guide (14a, 14b) that is integral with the guide beam (5), located at a height greater than the attachment to the bucket, then passes through a second guide (15a, 15b) that is integral with the foot of the corresponding side (8a, 8b), located at a height lower than the first guide and at a height lower than the seat pan (2), and then rises above the seat pan.

11. Aircraft seat according to one of the preceding claims, wherein one of the two attachment parts (10) (11) that are integral with the seatback (3) comprises a pivot pin (111) for articulation of the seatback around an axis parallel to a direction Y that is perpendicular to the plane XZ, and the other attachment part (11) (10) comprises an extendable part (101) for locally changing the distance from said seatback to the guide beam (5).

12. Aircraft seat according to Claim 11, wherein the guide beam (5) comprises at least two slides (51 a) that are approximately symmetrical in relation to a vertical symmetry plane XZ of said guide beam in which slides the attachment parts (10, 11) that are integral with the seatback (3) are mounted to slide freely.

13. Aircraft seat according to Claim 12, wherein the attachment part comprising an extendable element comprises at least two arms (112a, 112b) sliding in an anterior slide (51 a) at independent ends and pivoting around a common axis parallel to the direction Y linked to the seatback (3) at their other ends to form an angle that can be changed.

14. Aircraft seat according to one of the preceding claims, wherein the guide beam (5) comprises a fastener in an upper part of the said guide beam for connection to a ceiling structure or to a structure of a bulkhead of the aircraft.

15. Aircraft comprising at least one aircraft seat according to one of the preceding claims.
